# EUROPEAN PATENT APPLICATION

(11) **EP 4 841 233 A1**
(43) Date of publication of application: **18.11.2026**
(21) Application number: 26168389.0
(22) Date of filing: 27.03.2026
(51) Int. Cl.: G01M 17/04, G01M 17/06

(54) **PLAY DETECTOR DEVICE**

(30) Priority: 16.05.2025 IT 202500011074
(71) Applicant: OMCN S.P.A., 24020 Villa di Serio (Bergamo) (IT)
(72) Inventor: ESPOSITO, Alfonso, I-24020 Villa di Serio, BERGAMO (IT)
(74) Representative: Genito, Elena

(57) **Abstract**

A play detector device (1) for testing the axles, steering or suspensions of vehicles comprises at least one movable plate (21) for the housing of the wheels of the vehicle and a handling group (10) for inducing test movements in a first sliding direction (X). The handling group (10) comprises a first hydraulic cylinder (3) and a second hydraulic cylinder (30) positioned parallel to the first sliding direction (X). Each hydraulic cylinder (3, 30) comprises a first chamber (310) within which a centering piston (31) operates to bring the movable plate into the centered position (E) and a second chamber (320), connected in series to the first chamber (310) and fluid-tightly separated from each other, within which a movement piston (32) operates to bring the movable plate into a test position along the first sliding direction (X).

## Description

### Field of application

The present invention relates to a play detector device.

In the field of equipment for the testing and diagnostics of vehicles, particular attention is paid to the detection of play in the steering components, axles and suspensions.

Play detector devices, also known as wheel play detectors or steering and suspension play detectors or else joint play testers, are devices designed for the visual inspection of play in the steering components, axles and suspensions of vehicles, commonly used during the mandatory periodic inspections provided for by the regulations in force.

Generally, a play detector device consists of a pair of platforms, each provided with a movable plate, suitable for receiving, in resting contact, the wheels of the vehicle axle being tested. In other cases, the movable plates are arranged in recesses formed in a base plane. Such devices allow abnormal play, wear, or malfunctions to be detected which could compromise the safety and drivability of the vehicle.

The movement of the movable plates is actuated by suitable actuation means, for example by pneumatic or hydraulic cylinders.

Once the wheels are positioned on the platforms, the movable plates are driven in motion to test the response of the vehicle. The movable plates are suitable for achieving movements suitable for highlighting the presence of play in axles, suspension and steering components.

A current issue with these systems concerns the precise centering of the movable plates in their initial or centered, rest position, at the end of a test cycle. In the past, in fact, it was not required that the plates return to a neutral position, at the center. In the prior art, the few available solutions that apply this centering function rely on complex and potentially imprecise solutions.

For example, centering solutions are available on the market, capable of obtaining the return of the plates to the centered position by electronic control, springs or dedicated pistons.

Specifically, a known solution provides electronic devices and sensors configured to detect the position of the movable plates and to send a positioning signal to an electronic control unit that controls actuation means for moving the plates into the centered position.

Disadvantageously, such a solution requires directly providing the movable plates with an electric power supply.

Further, according to a further disadvantage, such systems rely on delicate and unreliable sensing instrumentation, especially due to the fact that it may move and lose precision by virtue of the localization on-board the equipment.

Alternative solutions provide for the use of springs suitable for returning the movable plates to a centered position when any other force on the plates is absent.

Disadvantageously, for normal operation it is required that the hydraulic cylinders be such as to exert a greater force to counteract the effect of such springs.

According to a further disadvantage, springs are subject to performance deterioration over time.

Further, such solutions do not ensure centering precision and generate residual stresses in the plates even in the centering position.

### Solution of the invention

Therefore, there is a strongly felt need to provide a play detector device capable of overcoming the typical drawbacks of the prior art.

In particular, it is an object of the present invention to provide a play detector device allowing smooth and reliable control of the initial position of the test plates, ensuring correct alignment during the diagnostic operations.

Further, the object of the invention is to provide a play detector device capable of smoothly integrating the operational and centering functions, thus improving the overall efficiency of the system.

A further object of the invention is to reduce the complexity of the mechanisms involved, minimizing the presence of components that are too sensitive or subject to premature deterioration, and at the same time to improve the synergy between movement and centering.

There is therefore a strongly felt urgency for technological solutions that can apply centering and, at the same time, offer precision, robustness, and sustainability over time.

Such a need is satisfied by a play detector device according to claim 1. The dependent claims describe preferred or advantageous embodiments of the invention, involving further advantageous aspects.

### Description of the drawings

The features and advantages of the play detector device will nonetheless be apparent from the description set forth below of some preferred embodiments, provided by way of non-limiting example with reference to the accompanying Figures, in which:
- Figure 1 shows a schematic representation of positions that may be assumed by a movable plate of a play detector device in an embodiment of the invention, in particular a centered position E, and a first test position A, a second test position B, a third test position C, and a fourth test position D;

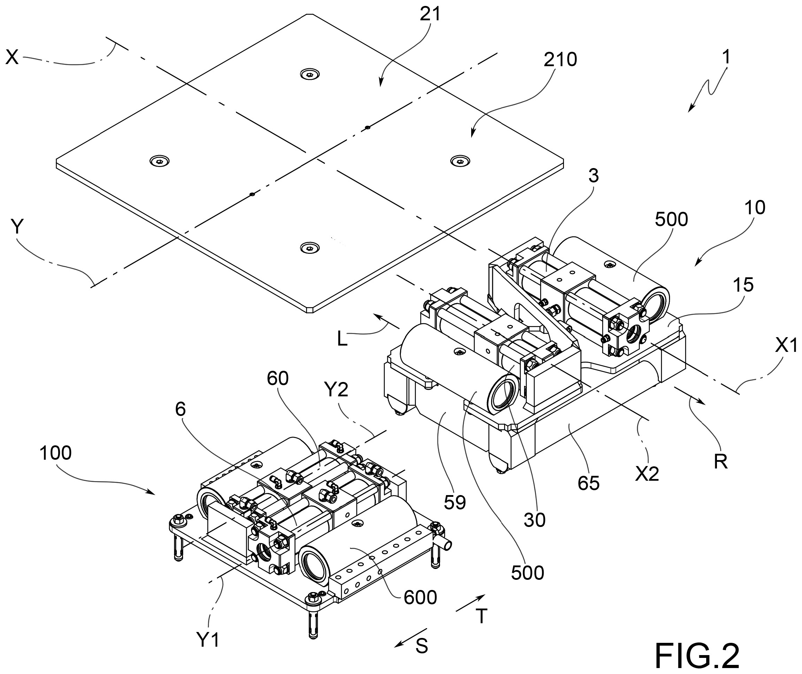

- Figure 2 shows a perspective view of a play detector device in an embodiment of the invention, wherein the movable plate, the first handling group and the second handling group are shown in an exploded view;
- Figure 3 shows a perspective view from below of a play detector device in an embodiment of the invention;
- Figure 4 shows a perspective view of a play detector device in an embodiment of the invention, wherein a part of the movable plate has been cut away to show the underlying portions;

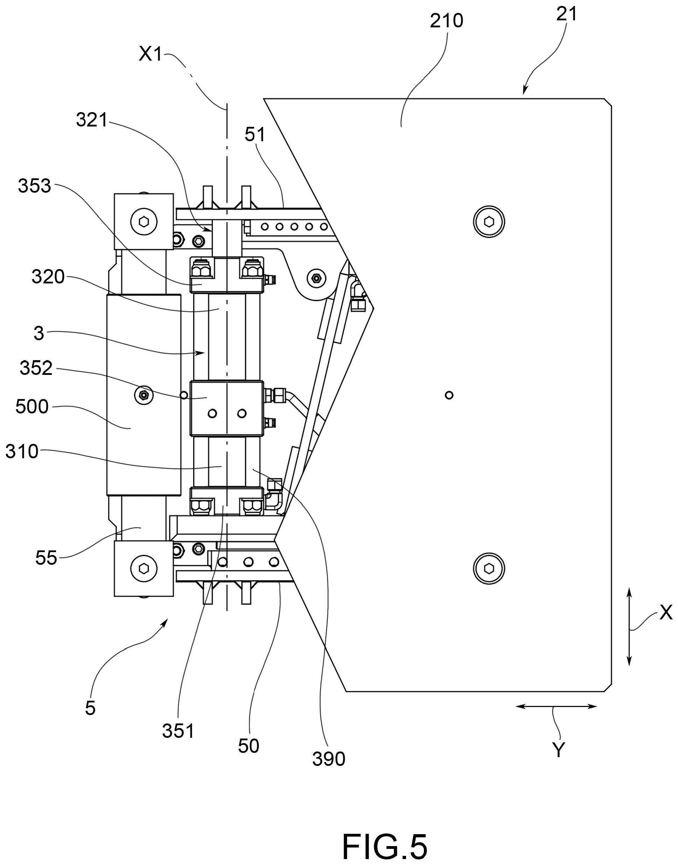

- Figure 5 shows a plan view of the play detector device in Figure 4;
- Figure 6 shows a perspective view of a hydraulic cylinder in an embodiment of the invention;

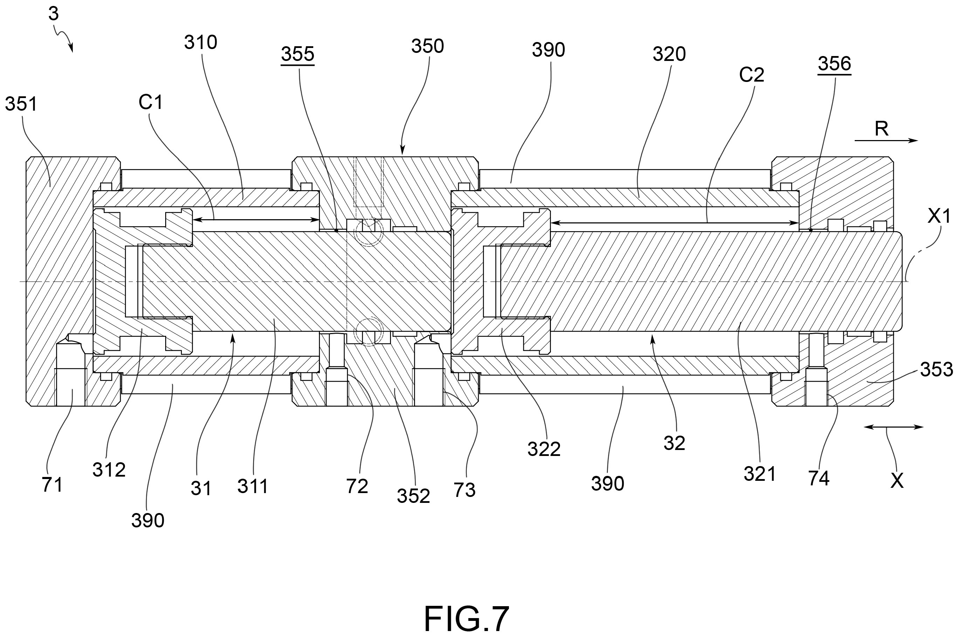

- Figure 7 shows a longitudinal sectional view of a hydraulic cylinder in an embodiment of the invention;
- Figure 8 shows a longitudinal sectional view of a hydraulic cylinder in an embodiment of the invention in a closed configuration;
- Figure 9 shows a longitudinal sectional view of a hydraulic cylinder in an embodiment of the invention, in a centered configuration;
- Figure 10 shows a longitudinal sectional view of a hydraulic cylinder in an embodiment of the invention in an open configuration;
- Figure 11 shows a planar section of a play detector device in an embodiment of the invention, in a first test position A;
- Figure 12 shows a planar section of a play detector device in an embodiment of the invention, in a centered position E;
- Figure 13 shows a planar section of a play detector device in an embodiment of the invention, in a second test position B.

### Detailed description

With reference to the aforesaid Figures, reference numeral 1 indicates as a whole a play detector device for testing the steering components and/or axles and/or suspensions of a wheeled vehicle.

According to the present invention, the play detector device 1 comprises at least one movable plate 21 intended to support at least one wheel of the vehicle.

Preferably, the play detector device 1 comprises a pair of movable plates 21, each intended to support a wheel of the vehicle.

The movable plate 21 is slidably movable in a sliding plane P, at least in a first sliding direction X between a first test position A and a second test position B.

Further, the play detector device 1 comprises at least one first handling group 10 configured to move the movable plate 21 in the first sliding direction X between the first test position A and the second test position B.

The first handling group 10 comprises a first hydraulic cylinder 3 which extends along a first axis X1, preferably parallel to the first sliding direction X, and which is configured to move the movable plate 21 in the first sliding direction X in a first orientation

R to reach the first test position A.

Further, the first handling group 10 comprises a second hydraulic cylinder 30 which extends along a second axis X2, preferably parallel to the first sliding direction X, and which is configured to move said movable plate 21 in said first sliding direction X in a second orientation L opposite the first orientation R to reach the second test position B.

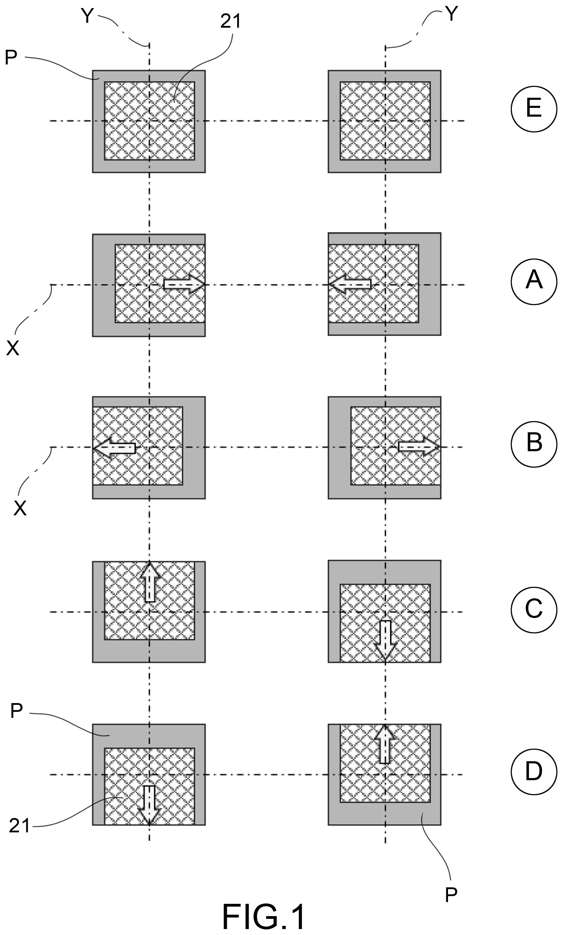

The accompanying figure 1 schematically shows some movements achievable by the play detector device in an embodiment of the present invention, comprising a pair of movable plates.

Preferably, the first axis X1 and the second axis X2 are non-coincident and equidistant with respect to the center of the movable plate 21.

In an embodiment, the first hydraulic cylinder 3 and the second hydraulic cylinder 30 have the same structure and are arranged along their respective axes X1 and X2 in an opposite manner, to operate each in its respective orientation R, L.

The structure of a hydraulic cylinder 3, 30 will be described in the remainder of the description and with reference to the Figures, in relation to the first hydraulic cylinder 3, but it is evident that the features of such first hydraulic cylinder 3 also apply to the second hydraulic cylinder 30.

The first hydraulic cylinder 3 comprises a first chamber 310 and a second chamber 320 arranged in series along the first axis X1. In other words, the first hydraulic cylinder 3 is a dual-chamber hydraulic piston.

In other words, the second hydraulic cylinder 30 comprises a first chamber 310 and a second chamber 320 arranged in series along the second axis X2 and fluid-tightly separated from each other. That is, passage of fluid from the first chamber 310 to the second chamber 320, and vice versa, is not permitted.

Preferably, in the first hydraulic cylinder 3 the first chamber 310 is upstream with respect to the second chamber 320 in the first orientation R and in the second hydraulic cylinder 30 the first chamber 310 is upstream with respect to the second chamber 320 in the second orientation L.

The first hydraulic cylinder 3 comprises a centering piston 31 movable in the first chamber 310 and a movement piston 32 movable in the second chamber 320.

According to the invention, the centering piston 31 is configured to access at least partially into the second chamber 320 so as to guide the movement of the movement piston 32 in the first sliding direction X and in such a way that the guided sliding of the movement piston 32 brings the movable plate 21 into a centered position E, different from the first test position A and the second test position B, preferably intermediate to them.

In other words, the centering piston 31 acts as a stop for the movement piston 32 before the end of its stroke, so as to stop the movable plate 21 in a centered position E different, preferably intermediate, from the first test position A and the second test position B.

Further, preferably, the movement piston 32 is freely movable with respect to the centering piston 31 so as to bring the movable plate 21 to the first test position A or to the second test position B.

In other words, the play detector device 1 according to the invention comprises a pair of double-chamber hydraulic pistons arranged, preferably parallel but in opposite directions, each comprising a centering piston 31, which serves to return the movable plate to the centered position E, acting directly and hydraulically on the respective movement piston 32 by applying a controlled displacement, without the need for sensors or further electronics on board the play detector device.

In summary, each hydraulic cylinder 3, 30 comprises a movement piston 32, designed to perform the full stroke necessary to induce the required test movements (for example, advancement or retraction displacements or lateral displacements), and a secondary piston, namely the centering piston 31, preferably having a limited stroke, ideally equal to about half of the stroke of the movement piston 32.

The operation is as follows.

During the test step, working fluid is injected into the second chamber 320 of the first hydraulic cylinder 3, and the necessary force is exerted on the movement piston 32 to move the plate toward the first test position A.

The movement piston 32 pushes the movable plate 21 into the first test position A.

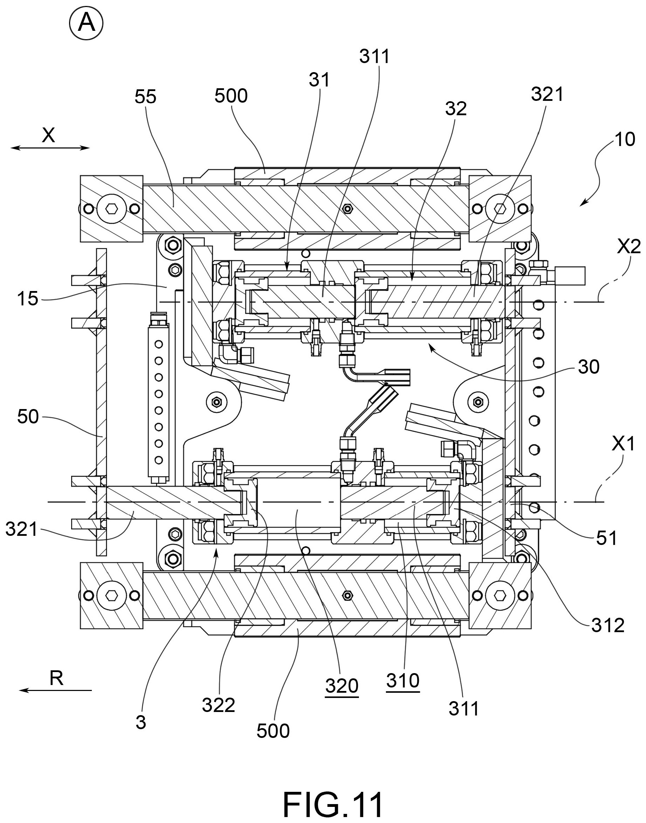

In such a configuration, the second hydraulic cylinder 30 remains in a completely closed position, as shown in Figure 11.

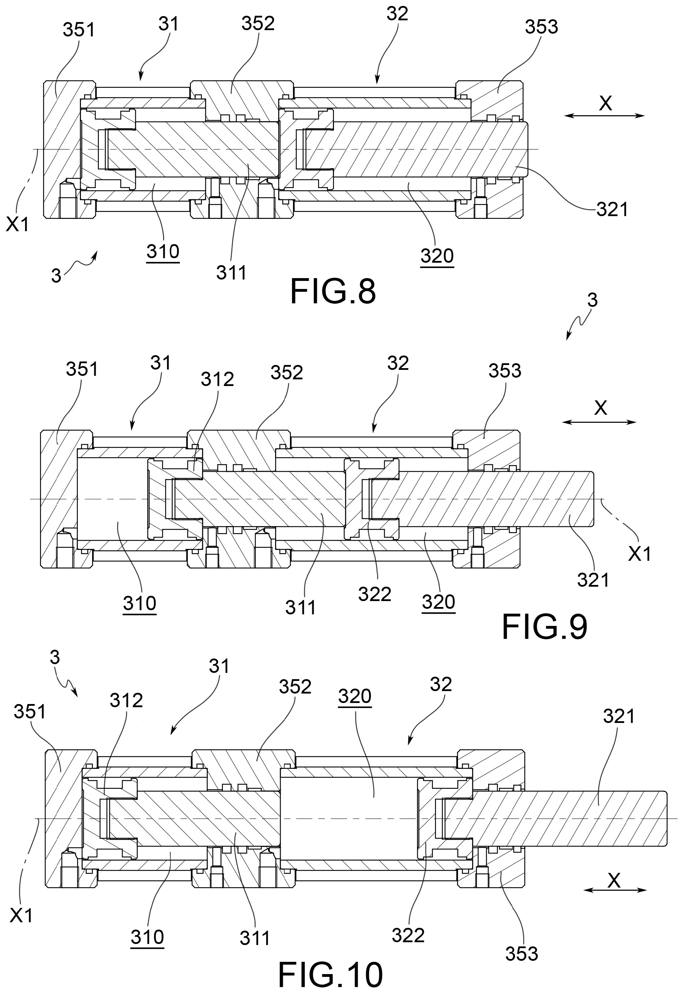

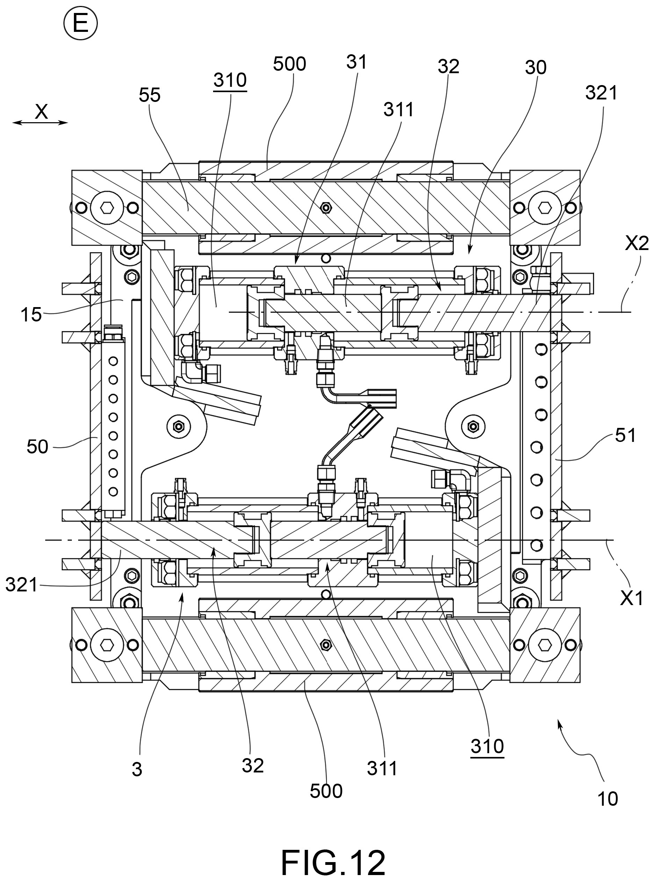

In a second step, to perform the centering, working fluid is injected into the first chamber 310. By virtue of its limited stroke and its configuration in series with the second chamber, the centering piston 31 moves into a centering position (Figure 9) wherein it at least partially occupies the second chamber 320 and acts as an abutment for the movement piston 32, preferably at about half of its stroke; thereby the movement piston, pushed by the fluid to return to the starting position, can only come into abutment with the centering piston and stop, bringing the plate into the centered position E or the rest position (Figure 9, Figure 12).

In the centered or rest position, both hydraulic cylinders 3, 30 assume the same position, as shown in Figure 12.

During the subsequent test step, working fluid is injected into the second chamber 320 of the second hydraulic cylinder 30, and the force necessary to move the plate toward the second test position B is exerted on the movement piston 32.

The movement piston 32 of the second hydraulic cylinder 30 pushes the movable plate 21 into the second test position B.

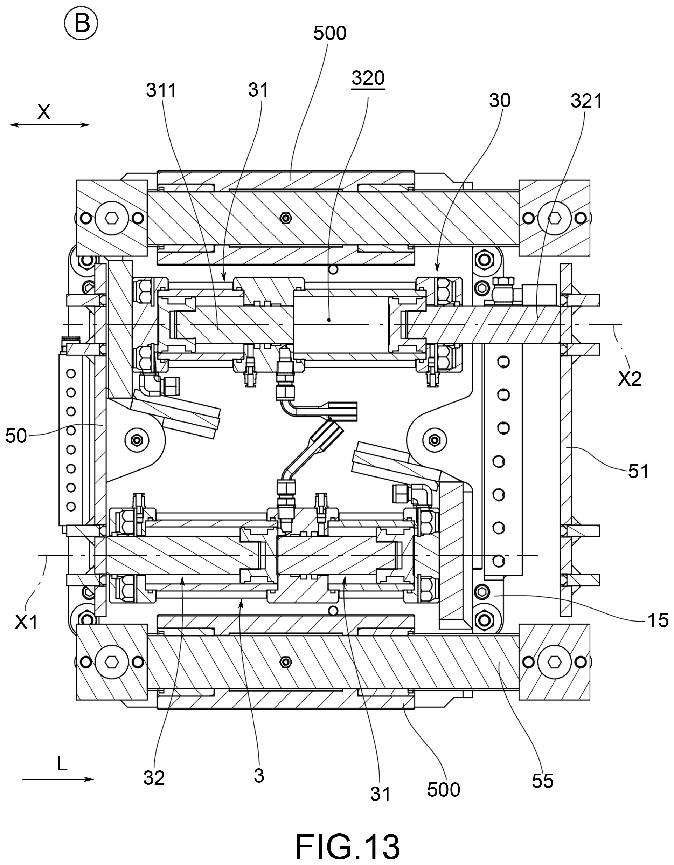

In such configuration, the first hydraulic cylinder 3 is forced to remain in a completely closed position, as shown in Figure 13.

In summary, the first handling group 10 comprises a pair of hydraulic cylinders 3, 30, suitable for moving the movable plate in the sliding direction, between a first test position A, a second test position B, and a centered position E. The first test position A is reached by moving the movable plate 21 in the sliding direction in a first orientation R, the second test position B is reached by moving the movable plate in the first sliding direction X in a second orientation L.

In an embodiment, the second hydraulic cylinder 30 is identical to the first hydraulic cylinder 3, but positioned in the opposite orientation and along a second axis X2, parallel to the first axis X1.

What is optionally described in the present disclosure regarding the first hydraulic cylinder 3 is also optionally applicable to the second hydraulic cylinder 30 and to the third and fourth hydraulic cylinder 6, 60 described subsequently.

Preferably, the first hydraulic cylinder 3 and the second hydraulic cylinder 30 are configured to move in a synchronized manner in the first sliding direction X and in opposite orientations to each other, respectively in the first orientation R and in the second orientation L.

In other words, in this advantageous embodiment, providing a pair of hydraulic cylinders positioned in a mutually opposite manner makes it possible to move the movable plate between two test positions A, B, for example forward and backward or right and left, and to return to the centered position E.

In this embodiment, in the first test position A, with reference to Figure 11, the first hydraulic cylinder 3 will be in the Figure 10 configuration and the second hydraulic cylinder 30 will necessarily be in the Figure 8 configuration.

In the second test position B, with reference to Figure 13, the first test cylinder 3 will be in the

Figure 8 configuration and the second hydraulic cylinder 30 will be in the Figure 10 configuration.

In the centered position E, with reference to Figure 12, both hydraulic actuators 3, 30 will be in the Figure 9 configuration.

Preferably, the first sliding direction X is parallel to a side of the movable plate 21. For example, the first sliding direction X is the direction of travel of the vehicle or the reverse direction of the vehicle, or the right steering direction or the left steering direction of the vehicle, namely one of the directions orthogonal to the direction of travel.

In an embodiment, the play detector device 1 comprises a control unit operatively connected to the hydraulic cylinder 3, 30 and configured to control the flow of fluid to the centering piston 31 and/or to the movement piston 32, so as to adjust the force and the speed of movement of the movable plate 21 in the first sliding direction X or in the second sliding direction Y, with reference to the embodiments described hereinafter.

Preferably, the control unit, not shown in the Figures for simplicity, is connected to a manual push-button panel controllable by an operator.

Preferably the push-button panel is also provided with an inspection torch for checking the steering components of the vehicle.

In an embodiment, the first chamber 310 and the second chamber 320 are dimensioned differently to distinctly modulate the centering stroke and the movement stroke of the movable plate 21.

The centering piston 31 is slidable in the first chamber 310 in the first sliding direction X for a centering stroke C1, and the movement piston 32 is slidable along the first sliding direction X for a movement stroke C2. In an advantageous embodiment, the centering stroke C1 is less than the movement stroke C2.

Preferably, upon completion of the centering stroke C1, the centering piston 31 has at least partially penetrated into the second chamber 320.

In a preferred embodiment, the centering stroke C1 is half of the movement stroke C2, preferably the centering stroke C1 is at least 50 mm, preferably it is equal to 50 mm, and the movement stroke C2 is at least 100 mm, preferably it is equal to 100 mm.

In an embodiment, the first chamber 310 has a greater length than the centering stroke C1 and the second chamber 320 has a greater length than the movement stroke C2, in the first sliding direction X.

In an embodiment, the movement piston 32 comprises a movement stem 321 and a movement head 322 engaged with the movement stem 321.

In an embodiment, the centering piston 31 comprises a centering stem 311 and a centering head 312 engaged to the centering stem 311 on the opposite side with respect to the movement piston 32.

The centering head 312 is suitable for being pushed by compressed fluid in the first chamber 310 to generate the sliding of the centering piston 31.

The centering stem 311 is suitable for abutting with the movement piston 32, preferably with the movement head 322 and to transmit the sliding to the movement piston 32.

The centering head 312 has an enlarged cross-section with respect to the centering stem 311 and the movement head 322 has an enlarged cross-section with respect to the movement stem 321. The cross-section of each piston head is such as to radially occupy the space delimited by the respective chamber and to allow the movement of the piston and the sealing of the injection fluid.

In an alternative embodiment, the movement piston 32 is a plunger piston, namely without a head. That is, the movement piston 32 consists of the movement stem 321.

Preferably the hydraulic cylinder 3, 30 comprises a fixed outer structure 350 that constrains the first chamber and the second chamber 310, 320 together.

The fixed outer structure 350 comprises an end plate 351 that closes the first chamber 310 at one end. Further, the fixed outer structure 350 comprises a central block 352 that connects the first chamber 310 and the second chamber 320 and allows the passage of the centering stem 311 from the first chamber 310 to the second chamber 320.

In an embodiment, the centering stem 311 is suitable for penetrating into the second chamber 320, to abut with the movement head 322, and to transmit sliding to the movement piston 32.

In an embodiment, the central block 352 comprises a through cavity sized so that the sliding of the centering stem 311 is allowed therein, in a fluid-tight manner, namely without allowing working fluid to pass between the first chamber and the second chamber, but not that of the centering head 312 nor that of the movement head 322.

The through cavity is such as to be always completely occupied by the centering stem 311, and to be sealed to separate the first chamber 310 and the second chamber 320.

The central block 352 comprises sealing elements such as O-rings or gaskets to ensure fluidic separation between the two chambers 310, 320.

The movement head 322 is such as to abut with an abutment wall of such central block 352, when the centering stem 311 is completely within the first chamber 310 and within the central block 352.

The fixed outer structure 350 finally comprises a hollow cap 353 at the end of the hydraulic cylinder 3 opposite the end plate 351.

Such a hollow cap 353 has a second through cavity 356 sized so that the movement stem 321 is allowed to slide therein, but not the movement head 322.

The movement head 322 is such as to abut with a second abutment wall of such hollow cap 353 when the movement piston 32 has completed its stroke C2.

In an embodiment, the fixed outer structure 350 comprises working fluid injection channels. In particular, a first injection channel 71 is formed in the end plate 351 toward the first chamber 310. In the central block 352 a second injection channel 72 to the first chamber 310 and a third injection channel 73 to the second chamber 320 are formed. In the hollow cap 353 a fourth injection channel 74 is formed towards the second chamber 320.

In an embodiment, the handling group 10, 100 comprises injection means for the working fluid.

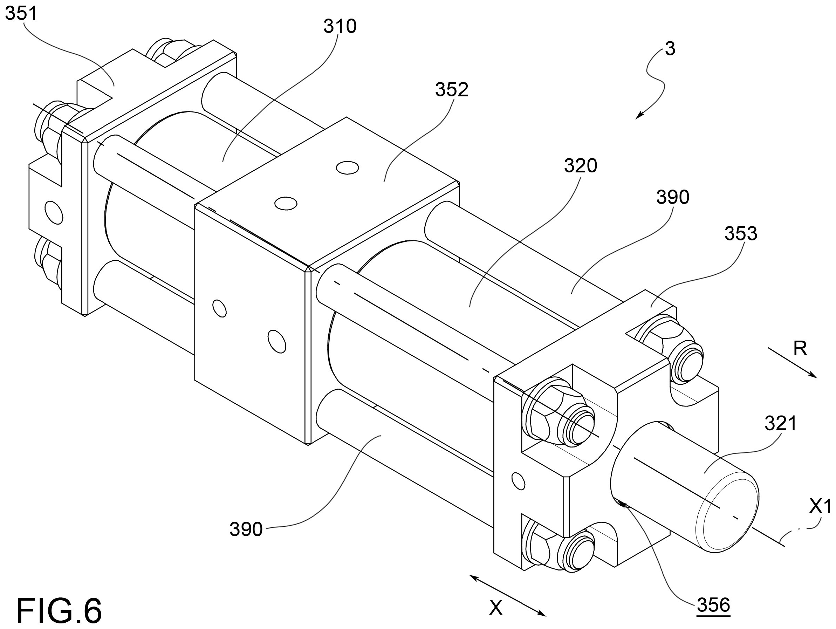

In an embodiment, the end plate 351, the central block 352 and the hollow cap 353 are constrained to one another by threaded bars 390 passing within respective through seats formed in said end plate 351, the central block 352 and the hollow cap 353, and fastened with external fastening means as shown in the example in Figure 6.

In an advantageous embodiment, the movable plate 21 is also slidable along a second sliding direction Y, belonging to the sliding plane P and preferably orthogonal to the first sliding direction X, between a third test position C and a fourth test position D.

The first and second sliding directions X, Y identify the sliding plane P.

Preferably, the sliding plane P is parallel to the floor or to a support surface of the play detector device 1.

In such an embodiment, the play detector device 1 comprises a second handling group 100 configured to move the movable plate 21 along the second sliding direction Y.

In an embodiment, the second handling group 100 is identical to the first handling group 10.

In an embodiment, the second handling group 100 is arranged orthogonally with respect to the first handling group 10.

In a preferred embodiment, the second handling group 100 is positioned at a lower level with respect to the first handling group 10, in a vertical direction orthogonal to the first sliding direction X and to the second sliding direction Y, with respect to the movable plate.

Advantageously, in such an embodiment the overall dimensions in the sliding directions of the handling groups are contained.

In an alternative embodiment, the second handling group 100 is positioned at the same level as the first handling group 10 in a vertical direction orthogonal to the first sliding direction X and to the second sliding direction Y.

In an embodiment, the second handling group 100 comprises a third hydraulic cylinder 6 which extends along a third axis Y1 preferably parallel to the second sliding direction Y and which is configured to move the movable plate 21 to move it in the second sliding direction Y in a third orientation S to reach the third test position C.

The third hydraulic cylinder 6 also has the same features as the first hydraulic cylinder 3, but is arranged along a third axis Y1 orthogonal to the first axis X1.

That is, the third hydraulic cylinder 6 comprises a first chamber 310 and a second chamber 320 arranged in series along a third axis Y1 and fluid-tightly separated from each other, a centering piston 31 movable in the first chamber 310, and a movement piston 32 movable in the second chamber 320.

The centering piston 31 is configured to at least partially enter into the second chamber 320 so as to guide the movement of the movement piston 32 in the second sliding direction Y, and so that the guided sliding of the movement piston 32 brings the movable plate 21 into the centered position E, different from the third test position C.

In an embodiment the centering piston 31 is configured to push and preferably stop the movement piston 32 in the third orientation S, so as to bring the movable plate 21 into a centered position E different from the third test position C.

In an embodiment, the movement piston 32 is freely movable with respect to the centering piston 31 in the third orientation S so as to bring the movable plate 21 into the third test position C.

In an embodiment, the second handling group 100 comprises a fourth hydraulic cylinder 60 which extends along a fourth axis Y2, preferably parallel to the second sliding direction Y and which is configured to move the movable plate 21 along the second sliding direction Y in a fourth orientation T opposite the third orientation S to reach a fourth test position D.

In other words, in such an embodiment, the second handling group 100 comprises a pair of hydraulic cylinders 6, 60, preferably parallel to each other, and suitable for moving the movable plate in the second sliding direction Y, between a third test position C, a fourth test position D, and a centered position E. The third test position C is reached by moving the movable plate 21 in the second sliding direction Y in a third direction S, the fourth test position D is reached by moving the movable plate in the second sliding direction Y in a fourth orientation T.

The fourth hydraulic cylinder 60 also has the same features as the first hydraulic cylinder 3, but is arranged along a fourth axis Y2, preferably orthogonal to the first axis X1.

That is, the fourth hydraulic cylinder 60 also comprises a first chamber 310 and a second chamber 320 arranged in series along a fourth axis Y2 parallel to the second sliding direction Y, a centering piston 31 movable in the first chamber 310 and a movement piston 32 movable in the second chamber 320.

The centering piston 31 is configured to push the movement piston 32 in the fourth orientation T, so as to bring the movable plate 21 to a centered position E different from the fourth test position D. The movement piston 32 is freely movable with respect to the centering piston 31 in the fourth orientation T so as to bring the movable plate 21 to the fourth test position D.

In an embodiment, the third hydraulic cylinder 6 and the fourth hydraulic cylinder 60 are configured to move synchronously in the second sliding direction Y and in opposite orientations, respectively in the third orientation S and in the fourth orientation T.

The movable plate 21 comprises a support surface 210 for the vehicle wheel and a lower surface 211 opposite said support surface 210.

Preferably, the support surface 210 has high roughness or a plurality of ribs or protrusions suitable or increasing friction between the movable plate 21 and the wheel of a vehicle.

In an advantageous embodiment, the movable plate 21 comprises a connection frame 5 protruding from the lower surface 211, which connects the movable plate 21 to the first handling group 10 so that the movable plate 21 is slidable in the sliding plane P by the action of the handling group 10.

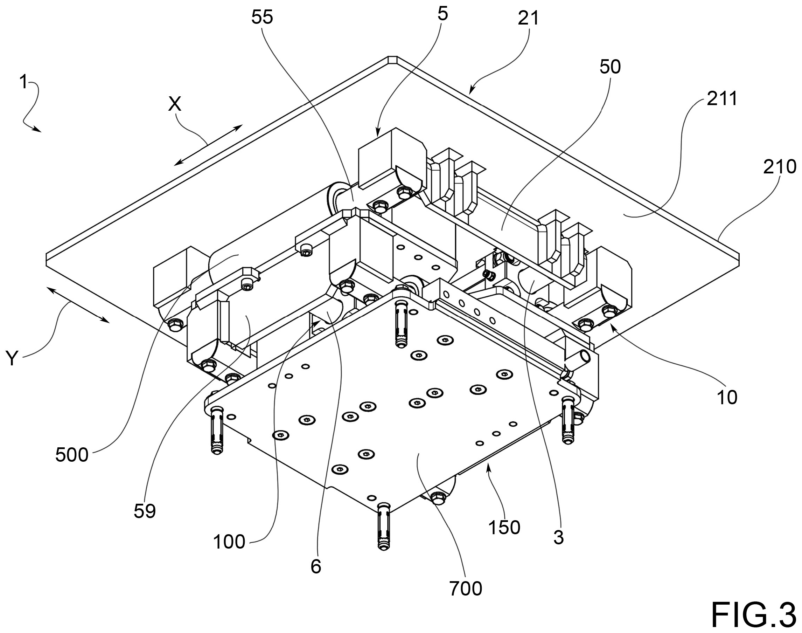

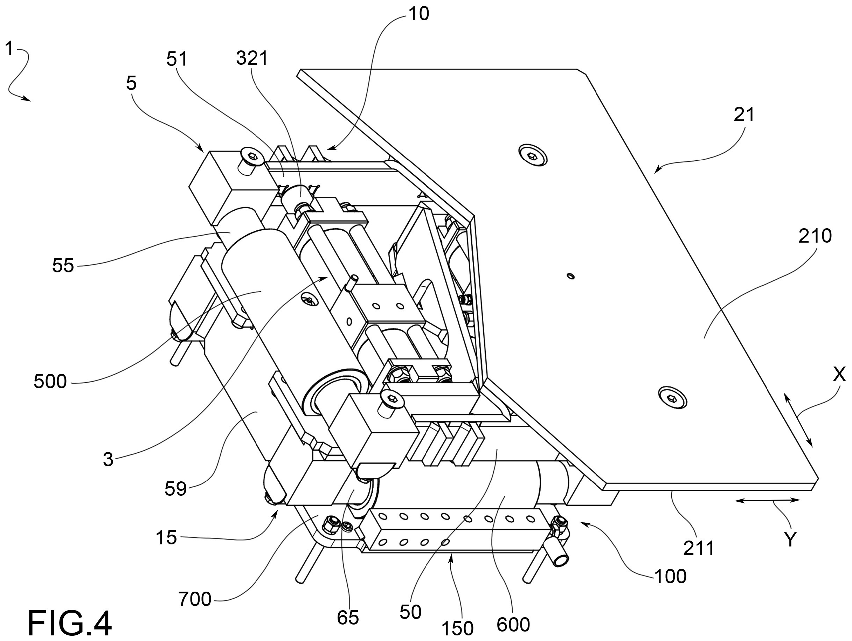

In an embodiment, the connection frame 5 comprises a first abutment element 50 and a second abutment element 51, for example abutment sheets, as shown in Figures 3 and 4, integral with the movable plate 21. The movement piston 32, preferably the movement stem 321, of the first hydraulic cylinder 3, is suitable for abutting with the first abutment element 50 and/or the movement piston 32 of the second hydraulic cylinder 30 is suitable for abutting with the second abutment element, to push the movable plate 21 slidingly in the first sliding direction X as a result of the movement of the movement piston 32 of the first hydraulic cylinder 3 and/or of the second hydraulic cylinder 30.

In an embodiment, the connection frame 5 comprises a sliding pin 55 parallel to the first sliding direction X. The first handling group 10 comprises a sliding sleeve 500 fitted on such sliding pin 55 so as to slide along it in the first sliding direction X, to support and accompany the movement of the movable plate 21 in the first sliding direction X.

In an embodiment, the first handling group 10 comprises a support structure 15 that supports the first hydraulic cylinder 3 and the second hydraulic cylinder 30 and is constrained to the movable plate 21.

In an embodiment, such support structure 15 comprises a third abutment element 59 and a fourth abutment element 58 integral with said support structure 15. The movement piston 32 of the third hydraulic cylinder 6 is suitable for abutting with the third abutment element 59 and the movement piston 32 of the fourth hydraulic cylinder 60 is suitable for abutting with the fourth abutment element 58, to push the movable plate 21 slidingly in the second sliding direction Y as a result of the movement of the movement piston 32 of the third hydraulic cylinder 6 and/or of the fourth hydraulic cylinder 60.

In an embodiment, the support structure 15 comprises a second sliding pin 65 parallel to the second sliding direction Y, and the second handling group 100 comprises a second sliding sleeve 600 fitted onto said second sliding pin 65 and slidable thereon in the second sliding direction Y, to support and accompany the movement of the movable plate 21 in the second sliding direction Y.

In an embodiment, the play detector device 1 comprises a system of regulating valves for the flow of the fluid toward the first handling group 10 and/or the second handling group 100, so as to precisely modulate the pressure transmitted to the centering stem 31 and to the movement stem 32 as a function of the specific operating conditions.

In an embodiment, the size and the ratio between the centering piston 31 and the movement piston 32 are optimized to ensure a symmetrical and accurate centering action on the movable plate 21.

In an embodiment, the hydraulic cylinder 3 is implemented in a compact and integrated configuration, capable of reducing the oversizing of the guide elements and minimizing structural stresses during the movement of the movable plate 21.

Innovatively, the present invention overcomes the drawbacks of play detector devices typical of the background art.

Advantageously, the play detector device according to the invention integrates both the movement function and the centering function in a single handling group that acts directly on the central axis of the plates.

This eliminates the problems of existing solutions, ensuring greater precision, fluidity of movement, and reduction of structural stresses.

According to a further advantage, the modular architecture of the hydraulic cylinder enables management of multiple positions and differentiation of speed and force between the various stages.

According to a still further advantage, the play detector device is smooth and reliable.

It is clear that, to the embodiments of the aforesaid play detector device, a person skilled in the art, so as to satisfy specific requirements, could make variants or substitutions of elements with others functionally equivalent.

Such variants are also included within the scope of protection as defined by the following claims. Moreover, each variation described as belonging to a possible embodiment can be implemented irrespective of the other variations described.

## Claims

1. Play detector device (1) for testing the steering components and/or axles and/or suspensions of a wheeled vehicle, comprising:
- at least one movable plate (21) intended to support at least one vehicle wheel and slidably movable in a sliding plane (P) in a first sliding direction (X) between a first test position (A) and a second test position (B);
- at least one first handling group (10) comprising a first hydraulic cylinder (3) which extends along a first axis (X1) and which is configured to move said movable plate (21) in said first sliding direction (X) in a first orientation (R) to reach the first test position (A) and a second hydraulic cylinder (30) which extends along a second axis (X2) and which is configured to move said movable plate (21) in said first sliding direction (X) in a second orientation (L) opposite the first orientation (R) to reach the second test position (B); **characterized in that** said first hydraulic cylinder (3) and said second hydraulic cylinder (30) each comprise:
- a first chamber (310) and a second chamber (320) arranged in series along said first axis (X1) or second axis (X2) and fluid-tightly separated from each other;
- a centering piston (31) movable in the first chamber (310) and a movement piston (32) movable in the second chamber (320);
wherein the centering piston (31) is configured to access at least partially into the second chamber (320) so as to guide the movement of the movement piston (32) in the first sliding direction (X) and in such a way that the guided sliding of the movement piston (32) brings the movable plate (21) into a centered position (E), different from the first test position (A) and the second test position (B), preferably intermediate to them.

2. Play detector device (1) according to claim 1, comprising a control unit operatively connected to said hydraulic cylinder (3) and second hydraulic cylinder (30) and configured to control the flow of fluid to the centering piston (31) and/or the movement piston (32), so as to regulate the force and speed of movement of the movable plate (21) in the first sliding direction (X).

3. Play detector device (1) according to claim 1 or 2, wherein the centering piston (31) is slidable in the first sliding direction (X) for a centering stroke (C1) and wherein the movement piston (32) is slidable along the first sliding direction (X) for a movement stroke (C2) and wherein the centering stroke (C1) is shorter than the movement stroke (C2), and wherein, upon completion of the centering stroke (C1), the centering piston (31) is at least partially penetrated into the second chamber (320).

4. Play detector device (1) according to claim 3, wherein the centering stroke (C1) is half of the movement stroke (C2), preferably the centering stroke (C1) is equal to 50 mm and the movement stroke (C2) is equal to 100 mm.

5. Play detector device (1) according to any one of the preceding claims, wherein the movement piston (32) comprises a movement stem (321) and a movement head (322) engaged with the movement stem (321) and the centering piston (31) comprises a centering stem (311) and a centering head (312) engaged with the centering stem (311) on the opposite side with respect to the movement piston (32), wherein the centering head (312) is suitable for being pushed by compressed fluid in the first chamber (310) to generate the sliding of the centering piston (31),
and wherein the centering stem (311) is suitable for penetrating the second chamber (320) and for abutting the movement head (322) and transmitting sliding to the movement piston (32).

6. Play detector device (1) according to any one of the preceding claims, wherein the first hydraulic cylinder (3) and the second hydraulic cylinder (30) are configured to move synchronously in the first sliding direction (X) and in opposite orientation one respect to the other, respectively in the first orientation (R) and in the second orientation (L).

7. Play detector device (1) according to any one of the preceding claims, wherein the movable plate (21) is movable sliding in a second sliding direction (Y), preferably orthogonal to the first sliding direction (X), to reach a third test position (C) and a fourth test position (D);
and wherein the play detector device (1) comprises a second handling group (100) comprising a third hydraulic cylinder (6) which extends along a third axis (Y1) and which is configured to move said movable plate (21) in said second sliding direction (Y) in a third orientation (S) to reach the third test position (C), and a fourth hydraulic cylinder (60) which extends along a fourth axis (Y2) and which is configured to move said movable plate (21) in said second sliding direction (Y) in a fourth orientation (T) to reach the fourth test position; **characterized in that** said third hydraulic cylinder (6) and said fourth cylinder (60) each comprise:
- a first chamber (310) and a second chamber (320) arranged in series along said third axis (Y1) or fourth axis (Y2) and sealed therebetween;
- a centering piston (31) movable in the first chamber (310) and a movement piston (32) movable in the second chamber (320);
wherein the centering piston (31) is configured to access at least partially into the second chamber (320) so as to guide the movement of the movement piston (32) in the second sliding direction (Y) and in such a way that the guided sliding of the movement piston (32) brings the movable plate (21) into the centered position (E), different from the third test position (C) and the fourth test position (D), preferably intermediate to them.

8. Play detector device (1) according to claim 7, wherein the third hydraulic cylinder (6) and the fourth hydraulic cylinder (60) are configured to move synchronously in the second sliding direction (Y) and in opposite orientations, respectively in the third orientation (S) and in the fourth orientation (T).

9. Play detector device (1) according to any one of the preceding claims, wherein the movable plate (21) comprises a support surface (210) for the vehicle wheel and a lower surface (211) opposite said support surface (210) and comprises a connection frame (5) protruding from the lower surface (211) suitable for connecting the movable plate (21) to the first handling group (10) so that the movable plate (21) is pushed slidingly by the action of the handling group (10).

10. Play detector device (1) according to claim 9, wherein the connection frame (5) comprises a first abutment element (50) and a second abutment element integral with the movable plate (21) and wherein the movement piston (32) of the hydraulic cylinder (3) is suitable for abutting with said abutment element (50) and/or the movement piston (32) of the second hydraulic cylinder (30) is suitable for abutting with the second abutment element, to drag the movable plate (21) sliding in the first sliding direction (X) due to the movement of the movement piston (32) of the hydraulic cylinder (3) and/or the second hydraulic cylinder (30).

11. Play detector device (1) according to claim 10, wherein the connection frame (5) comprises a sliding pin (55) parallel to the first sliding direction (X) and wherein the first handling group (10) comprises a sliding sleeve (500) fitted on said sliding pin (55) and slidable thereon in the first sliding direction (X) to support and accompany the movement of the movable plate (21) in the first sliding direction (X).

12. Play detector device (1) according to claim 7, wherein the first handling group (10) comprises a support structure (15) which supports said cylinder (3) and second cylinder (30) and is constrained to the movable plate (21), and wherein said support structure (15) comprises a third abutment element (59) and a fourth abutment element integral with said support structure (15) and wherein the movement piston (32) of the third hydraulic cylinder (6) or the fourth hydraulic cylinder (60) is suitable for abutting with said third abutment element (59) and the movement piston (32) of the fourth hydraulic cylinder (60) is suitable for abutting with the fourth abutment element, to drag the movable plate (21) sliding in the second sliding direction (Y) due to the movement of the movement piston (32) of the third hydraulic cylinder (6) and/or the fourth hydraulic cylinder (60).

13. Play detector device (1) according to claim 12, wherein the support structure (15) comprises a second sliding pin (65) parallel to the second sliding direction (Y) and wherein the second handling group (100) comprises a second sliding sleeve (600) fitted on said second sliding pin (65) and slidable thereon in the second sliding direction (Y) to support and accompany the movement of the movable plate (21) in the second sliding direction (Y).
